# NOUVEAU FASCICULE DE BREVET EUROPEEN

(11) **EP 1 874 622 B2**
(45) Date de publication et mention de la décision concernant l'opposition: **29.09.2021**
(45) Mention de la délivrance du brevet: 31.10.2018
(21) Numéro de dépôt: 06743836.6
(22) Date de dépôt: 24.04.2006
(51) Int. Cl.: B64C 1/14, B60J 1/00, G09F 3/18, E06B 3/66

(54) **VITRAGE COMPORTANT UN DISPOSITIF ELECTRONIQUE ET PROCEDE DE LECTURE-ECRITURE DES INFORMATIONS INCLUSES DANS CE DISPOSITIF**
GLASUR MIT EINER ELEKTRONISCHEN VORRICHTUNG UND VERFAHREN ZUM LESEN/SCHREIBEN VON INFORMATIONEN IN DIESER VORRICHTUNG
GLAZING COMPRISING AN ELECTRONIC DEVICE AND METHOD OF READING/WRITING INFORMATION IN SAID DEVICE

(30) Priorité: 07.12.2005 FR 0553755; 26.04.2005 DE 102005019326
(43) Date de publication de la demande: 09.01.2008
(73) Titulaire: SAINT-GOBAIN GLASS FRANCE, 92400 Courbevoie (FR)
(72) Inventeur: FOUREAU, Frédéric, 45470 Trainou (FR)
(74) Mandataire: Saint-Gobain Recherche
(86) Numéro de dépôt international: PCT/FR2006/050379
(87) Numéro de publication internationale: WO 2006/114543

(56) Documents cités:
- EP-A- 1 698 455
- EP-A1- 1 698 455
- WO-A-00/36261
- WO-A1-02/101188
- WO-A1-2006/114211
- DE-A1- 3 338 125
- DE-A1- 10 317 914
- DE-A1- 19 607 294
- FR-A1- 2 787 135
- JP-A- H1 116 014
- US-B1- 6 275 157
- US-B1- 6 275 157

## Description

L'invention concerne les vitrages munis d'au moins un dispositif électronique qui comporte au moins une mémoire électronique dans laquelle sont enregistrées des informations pouvant être lues à distance au moyen d'un appareil de lecture adapté.

L'invention sera plus particulièrement décrite par rapport au domaine de l'aéronautique mais sans y être limitée.

Il est connu d'apposer en sortie de ligne de fabrication, sur les vitrages destinés à l'aéronautique tels que les vitrages pour cockpit d'avion, un élément de marquage, comprenant généralement au moins la marque du fabricant, le numéro de série et la date de fabrication, ainsi qu'un numéro de code d'identification du vitrage nommé « Part Number ». Ce numéro « Part Number » enregistré auprès d'un organisme officiel identifie toutes les informations liées aux caractéristiques techniques du vitrage et à sa fabrication. Un tel élément de marquage est généralement imprimé sur une étiquette qui est collée sur le verre du vitrage, ou bien gravé sur une étiquette métallique qui est rapportée sur l'entourage du vitrage.

Les vitrages d'avion doivent être changés périodiquement en raison du vieillissement, qui peut par exemple engendrer des délaminages du feuilleté, une détérioration du chauffage, en raison également des casses éventuelles, notamment au sol ou au décollage due à la projection de gravillons ou autres objets, et enfin en raison de leur endommagement en plein vol lié aux intempéries tels que la grêle, la foudre, ou suite à des impacts de volatiles.

Ces vitrages sont remplacés sans connaître exactement le nombre d'heures de vol effectuées avec ceux-ci. Un décompte du nombre d'heures effectuées entre chaque changement de vitrage nécessite en effet aujourd'hui une gestion administrative trop complexe. Cette information n'est donc pas directement disponible et n'est pas non plus centralisée. Seul un nombre d'heures moyen peut être établi par rapport à la date de mise en service de l'avion et du nombre d'heures de vol effectuées par l'avion, et à condition que la compagnie aérienne en charge de l'avion participe, et de manière valable, à la communication de ces données.

Il est par conséquent impossible, en particulier pour le fabricant de vitrages, de rendre compte de la fiabilité d'un vitrage par rapport au nombre d'heures de vol réellement effectuées. Or, cette information pourrait être très utile pour assurer un meilleur suivi des vitrages, optimiser les changements des vitrages dans le temps, rendre compte pour le fabricant de vitrage de la qualité, de la fiabilité au cours du temps de ses vitrages vis-à-vis de ses clients.

Il est par ailleurs connu de doter certains vitrages, en particulier pour leur suivi depuis leur fabrication jusqu'à leur utilisation, de moyens pérennes d'identification contenant des informations liées au vitrage. Ces moyens pérennes sont par exemple constitués d'une étiquette électronique associée au vitrage, l'étiquette électronique permettant de stocker un nombre important d'informations.

Le brevet EP 1 144 791 -B1 décrit un vitrage muni d'une étiquette électronique comportant une puce électronique qui possède en mémoire toutes les informations liées au vitrage, et une antenne qui assure la transmission des informations entre la puce et un dispositif extérieur d'émission/réception assurant la lecture et/ou l'écriture des informations. L'échange des informations se fait sans contact, par onde électromagnétique de fréquence pouvant varier de 125 kHz à quelques dizaines de MHz.

La demande de brevet FR 2 787 135 A1 décrit un multiple vitrage à étiquette électronique, ladite étiquette électronique contenant des informations numériques ayant trait aux caractéristiques du ou des verres utilisés et à sa fabrication et pouvant être lues à distance au moyen d'un lecteur prévu à cet effet.

De tels systèmes d'échange de données sans contact utilisés le plus souvent pour des identifications à distance, des antivols, des suivis d'objets dans des lieux de transit, sont aujourd'hui connus sous le nom de RFID (Radio Frequency Identification Device).

Dans l'application qui nous intéresse, en particulier celle des vitrages aéronautiques, l'étiquetage électronique du vitrage permettrait de lire et même d'écrire à distance au moyen d'un appareil d'écriture des informations liées aux caractéristiques techniques du vitrage ; ces informations seraient ainsi directement accessibles depuis le vitrage.

L'invention a donc pour but de fournir un vitrage muni d'un dispositif électronique de traçabilité qui permette de connaître durant toute la vie du vitrage les caractéristiques techniques liées au vitrage et/ou à sa fabrication, ainsi que toutes informations liées, au cours du temps, au fonctionnement, à l'utilisation du vitrage et/ou du dispositif accueillant le vitrage.

Selon l'invention, le vitrage est caractérisé en ce qu'il est destiné à être intégré dans un dispositif de locomotion de type aéronautique et comporte en outre un ou plusieurs organes de détection et d'émission de données, qui sont des capteurs, choisi parmi capteur de courant électrique, capteur de pression, capteur de température, capteur de vibrations, accéléromètre, inclinomètre, détecteur d'actionnement mécanique, les informations étant transmises et inscrites dans ladite mémoire par les moyens électroniques en réponse à des signaux reçus de manière programmée, c'est-à-dire de manière automatique et sans intervention humaine, depuis un ou plusieurs organes de détection et d'émission de données.

Les organes de détection et d'émission de données sont compris comme associés au vitrage et/ou au dispositif accueillant le vitrage de sorte qu'ils n'incluent pas les organes de détection qui détecteraient la présence du vitrage en tant que tel.

En outre, on entend par l'expression «de manière programmée » relative aux signaux reçus, tout processus de transmission de données qui ne fait pas intervenir le choix d'une personne humaine à transmettre ces données.

Ainsi, le vitrage intègre selon un enregistrement programmé des informations qui sont directement liées à l'utilisation du vitrage dans son environnement et/ou liées au dispositif intégrant le vitrage, et/ou à un élément électrique intégré au vitrage, ces informations évoluant au cours du temps.

Par conséquent, toute information utile dans l'utilisation du vitrage ou liée à l'environnement dans lequel le vitrage est utilisé peut ainsi être automatiquement enregistrée durant toute la vie du vitrage sans intervention humaine, et être rendue facilement accessible car intégrée au vitrage.

De préférence, l'accès aux informations enregistrées dans la mémoire est réservé à des utilisateurs autorisés et assuré grâce à des moyens de cryptage/décryptage.

Selon une autre caractéristique, le dispositif électronique est protégé de l'environnement extérieur de façon à ne pas être altéré par exemple par un changement de température, par l'humidité, les vibrations, l'accélération éventuelle subie par le produit dans lequel le vitrage est intégré, mais aussi de ne pas être déréglé ou perturbé par exemple par des ondes électromagnétiques non désirées, ou même de façon à fonctionner correctement sans être par exemple gêné par des obstacles physiques lors de la transmission de données. On peut ainsi veiller à ce que le dispositif soit recouvert d'un matériau adapté et/ou qu'il soit agencé de manière appropriée.

Selon une autre caractéristique, le dispositif électronique est rendu solidaire de la périphérie du vitrage, de préférence à un endroit destiné à être caché par le châssis dans lequel sera logé le vitrage. Le dispositif électronique peut aussi être incorporé à l'intérieur du vitrage muni d'au moins deux feuilles de verre, tel qu'un vitrage feuilleté ou un vitrage isolant. Ainsi, il n'est pas accessible et sera à l'abri de tout risque de dégradation ou de retrait involontaire du vitrage.

L'organe de détection et d'émission de données peut être inclus dans le vitrage ou bien être éloigné et associé au dispositif accueillant le vitrage.

Bien entendu, l'intérêt est de pouvoir lire à un moment donné les informations stockées dans la mémoire du vitrage à l'aide d'un appareil de lecture adapté, cet appareil pouvant également fonctionner en appareil d'écriture s'il est nécessaire d'inscrire des informations dans la mémoire, autrement que par le déclenchement programmé des organes de détection et d'émission de données mais par une volonté humaine.

Ainsi, la mémoire du dispositif électronique comprend des informations déjà stockées avant le fonctionnement du dispositif électronique en réponse aux signaux reçus de manière programmée, les informations étant notamment relatives aux caractéristiques d'identification, de configuration, de fabrication, et aux caractéristiques techniques du vitrage, et/ou aux caractéristiques relatives à l'élément électrique que peut intégrer le vitrage.

On entend dans toute la description par appareil de lecteur/écriture, un appareil de lecture ou un appareil de lecture et écriture. La transmission des informations entre l'appareil de lecture/écriture et le dispositif électronique est réalisée par des moyens de communication dont la technologie est choisie en fonction notamment de l'emplacement du dispositif électronique sur le vitrage par rapport à son environnement d'accueil.

Les moyens de communication sont ainsi du type liaison par radio-fréquences telles que par des systèmes d'identification par radio-fréquences (RFID), par la technologie Wi-Fi ou Bluetooth®, ou du type liaison par signal optique tel que par infrarouge, par pistes de transmission capacitives ou inductives, ou tout simplement du type liaison par câble.

Ces moyens de communication sont selon l'invention de préférence par transmission de signaux radio-fréquences, pouvant aller d'une centaine de kHz à environ 6 GHz selon la distance de lecture. Le dispositif électronique utilise de préférence la technologie RFID, et comprend à cet effet une antenne d'identification par radio-fréquences associée aux moyens électroniques, l'antenne coopérant avec une autre antenne du même type associée à l'appareil de lecture/écriture.

Avantageusement les moyens électroniques du dispositif électronique comportent un système d'identification qui évite la collision avec d'autres informations non destinées audit dispositif. Ainsi, les informations entre l'appareil de lecture/écriture et le dispositif électronique du vitrage sont transmises selon un protocole de codage et de cryptage qui peut être un protocole propriétaire (développé pour cette application) ou standard (Modbus, CAN, TCPIP par exemple). Le protocole garantit dans le cas d'une communication établie à proximité de plusieurs vitrages incluant des dispositifs électroniques selon l'invention, l'anticollision entre les informations provenant des différentes mémoires des dispositifs.

L'appareil de lecture/écriture stocke à son tour en mémoire les résultats d'interrogation du dispositif électronique. Ces résultats peuvent ensuite être avantageusement communiqués à un système central de gestion, tel qu'un ordinateur via une communication par câble ou toute autre, par exemple Wi-Fi avec connexion à l'Internet.

Pour informer de la lecture sans contact et identifier le vitrage de l'invention, il est préférable de doter le vitrage d'un marquage bien reconnaissable de l'extérieur et duquel on peut approcher l'appareil de lecture pour obtenir une transmission fiable des signaux. De manière particulièrement discrète, le marquage peut présenter la forme d'un décor ou la forme d'un sceau ou d'un logo du fabricant et peut également être contrecollé comme élément d'un décor de plus grande surface.

Le vitrage de l'invention est ainsi destiné à être intégré dans un dispositif de locomotion, de type aéronautique, de manière, en particulier pour un appareil aéronautique à enregistrer les heures de vol dans la mémoire électronique.

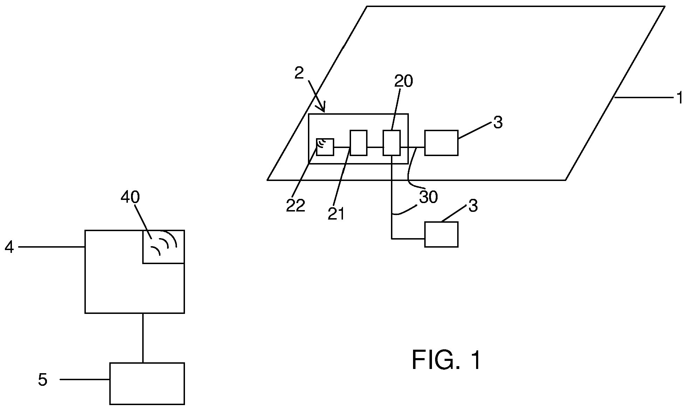

D'autres caractéristiques et avantages de l'invention apparaîtront dans la description qui suit, en regard du dessin schématique de la figure 1 qui représente schématiquement un vitrage muni de son étiquette électronique selon l'invention et les éléments nécessaires au procédé d'enregistrement d'informations et de lecture à distance des informations stockées dans l'étiquette électronique.

La figure n'est pas à l'échelle pour en faciliter la lecture.

La figure 1 illustre un vitrage 1 selon l'invention muni d'au moins un dispositif électronique 2 qui comporte des moyens électroniques de réception et de traitement de données 20 et une mémoire électronique 21.

Le dispositif électronique 2 est apposé à un endroit approprié du vitrage en fonction de l'utilisation finale qui est faite dudit vitrage de façon que le dispositif ne gêne pas par exemple la visibilité. Ils peut par exemple être placé sur le verre, ou intégré dans le vitrage, par exemple associé à l'intercalaire dans le cas d'un vitrage feuilleté, ou encore rendu solidaire du cadre périphérique entourant le vitrage.

La mémoire électronique 21 stocke des informations qui sont inscrites par les moyens électroniques de réception et de traitement de données 20 en réponse à des signaux reçus de manière programmée depuis des organes de détection et d'émission de données 3.

On distinguera dans l'invention les informations dites « dynamiques », celles-ci étant évolutives dans le temps, des informations qualifiées de « statiques » qui, une fois écrites dans la mémoire 21, ne sont plus modifiables.

Les informations statiques sont de préférence inscrites par intervention humaine à l'aide d'un appareil d'écriture destiné à coopérer avec le dispositif électronique 2.

Les informations statiques concernent par exemple le fabricant, le numéro de série du vitrage, les caractéristiques techniques du vitrage, son procédé de fabrication, l'identification du produit pour lequel est destiné le vitrage.

Les informations statiques peuvent être acquises lors de la phase de production du vitrage, lors d'une phase d'initialisation telle qu'à la mise en service du vitrage, ou lors d'une phase de mise à jour.

Les informations dynamiques inscrites en mémoire sont vouées à être remplacées en fonction des données fournies au cours du temps et de manière programmée par les organes de détection et d'émission 3.

Pour un exemple d'utilisation d'un vitrage dans un cockpit d'avion, les informations dynamiques correspondront aux heures de vol effectuées avec ledit vitrage, à la date de mise en service du vitrage, à la date de son changement, à des dysfonctionnements liés au vitrage (d'éléments intégrés au vitrage) ou à d'autres éléments du dispositif accueillant le vitrage. La mémoire 21 sera évidemment et utilement une mémoire permanente qui garde durablement son contenu même lorsqu'elle n'est pas alimentée en tension. Elle pourra être écrasable, de manière partielle, et de manière contrôlée.

Les moyens électroniques de réception et de traitement de données 20 sont connectés d'une part à la mémoire électronique 21, et d'autre part coopèrent avec un ou plusieurs organes de détection et d'émission de données 3 qui dès qu'une donnée est prise en compte en fonction de leur type de fonctionnement déclenchent de manière programmée la transmission du signal vers les moyens électroniques 20. Les moyens électroniques 20 recevant alors les données transmises par les organes de détection et d'émission, les traite et transmettent les informations en résultant à la mémoire 21 selon un protocole d'écriture défini.

Il sera préféré que les organes de détection et d'émission 3 puissent acquérir en continu leur données et que ce soient les moyens électroniques 20 qui gèrent l'interrogation des organes pour obtenir les données au moment souhaité.

Les moyens électroniques de réception et de traitement de données 20 gèrent l'arrivée des données et leur traitement à l'aide de microcontrôleurs, et autres systèmes connus aux fonctionnalités diverses tels que des convertisseurs A/N, des horloges, des unités de calcul arithmétique, de cryptage, d'anticollision, d'authentification et de contrôle d'accès, etc...

Physiquement, les moyens électroniques 20 sont constitués de plusieurs composants électroniques dont une mémoire électronique. Mais il est possible d'envisager un dispositif électronique 2 ne formant qu'un seul élément tel qu'une étiquette électronique.

En fonction du type de données à capter par les organes de détection et d'émission 3, ces derniers peuvent par exemple être directement associés au vitrage ou être en dehors du vitrage.

Positionné sur le vitrage, il peut par exemple s'agir d'un capteur de courant détectant le courant qui est induit par une sonde de température connectée aux fils métalliques ou à la couche chauffante du vitrage. Les vitrages étant toujours en fonctionnement de chauffe lors du vol d'un avion, l'utilisation du capteur de courant permettra de connaître le nombre d'heures de vol effectuées à partir de la durée de fonctionnement du chauffage.

On peut également citer un capteur de vibrations, un capteur de pression. Le capteur de pression disposé par exemple sur le vitrage rendra compte de la pression subie par le vitrage et par conséquent du temps passé pour l'avion en altitude, et donc du temps à voler.

De la même manière, des capteurs du type accéléromètre, inclinomètre associés au vitrage peuvent être employés. Par exemple, pour un avion, l'accéléromètre ou l'inclinomètre permettront lors du dépassement d'une valeur seuil de déclencher au niveau des moyens électroniques 20 un compteur qui permettra d'évaluer le nombre d'heures de vol de l'avion, cette donnée traitée du nombre d'heures sera inscrite dans la mémoire 21.

Mais les organes de détection et d'émission 3 peuvent aussi être en dehors du vitrage.

Un exemple est celui d'un détecteur mécanique ou électronique associé à un dispositif extérieur au vitrage dont l'actionnement mécanique sert d'événement déclencheur pour le paramètre à enregistrer dans la mémoire 21 du dispositif électronique. Pour un avion, le dispositif extérieur peut correspondre aux toboggans dont l'armement qui sera en place durant toute la durée du vol rendra ainsi compte de la durée du vol.

D'autres organes de détection et d'émission distincts de capteurs peuvent encore être utilisés tels que le régulateur de chauffage ou tout autre système informatique embarqué dans l'avion.

Les moyens électroniques de réception et de traitement de données 20 coopèrent avec les organes de détection et d'émission de données 3 par des éléments de liaison 30, du type câble pour signaux électriques ou fibres optiques pour signaux optiques, ou bien par tout moyen de communication sans contact connu tels que liaison par signaux radio-fréquence, liaison optique du type infrarouge.

Les organes de détection et d'émission 3 comme les éléments de liaison 30 et le dispositif électronique 2 sont agencés de manière appropriée pour être protégés de l'environnement extérieur sans risque d'endommagement afin de garantir l'enregistrement des informations durant toute la durée de vie du vitrage.

En outre, ils présentent des fonctionnalités d'inviolabilité physiques et électroniques pour garantir leur fiabilité et donc la validité des informations inscrites dans la mémoire 21.

Les informations inscrites dans la mémoire 21 sont destinées à être lues par un appareil de lecture/écriture sans contact 4. Bien entendu, l'appareil 4 peut également transmettre un signal d'informations au dispositif électronique pourécrire des informations dans la mémoire 21. De préférence, il est choisi, en tant que moyens de communication entre l'appareil de lecture/écriture 4 et le dispositif électronique 2, une liaison sans contact telle que par radio-fréquences.

Aussi, le dispositif électronique 2 comporte, connectée aux moyens électroniques 20, une antenne 22 fonctionnant par ondes électromagnétiques. L'antenne 22 échange des signaux avec une antenne correspondante du même type 40 de l'appareil de lecture/écriture 4.

L'appareil de lecture/écriture 4 est portable en étant amené à proximité du vitrage ou peut faire partie intégrante du dispositif, tel que l'avion, accueillant le vitrage. Il est destiné à retransmettre par tous moyens connus les informations à un système central de base de données 5, par exemple un ordinateur, disposé au sein de l'avion ou situé dans n'importe quel lieu tel que l'usine de production des vitrages, l'entreprise du fabricant d'avions.

Le procédé selon l'invention d'enregistrement d'informations et de lecture à distance de ces informations est le suivant.

En sortie de fabrication du vitrage, le dispositif électronique 2 est solidaire du vitrage.

Les organes de détection et d'émission 3 peuvent être connectés en usine s'ils sont directement associés au vitrage ou seront connectés lors du montage du vitrage dans le logement d'accueil auquel il est destiné, s'ils sont agencés à distance du vitrage. Des liaisons physiques 30 peuvent ainsi éventuellement sortir en périphérie du vitrage pour la connexion ultérieure à des organes de détection et d'émission 3.

Des informations statiques sont éventuellement déjà inscrites dans la mémoire 21.

Une fois le vitrage livré, il est monté dans son logement d'accueil tel qu'un encadrement de cockpit d'avion, les connexions nécessaires si besoin entre les organes 3 et les liaisons physiques 30 étant effectuées.

Selon le ou les paramètres choisis pour faire état du nombre d'heures de vol de l'avion ou une autre information à enregistrer dans la mémoire 21 du dispositif électronique, les capteurs ou autres organes de détection et d'émission 3 se déclenchent à la fermeture des toboggans, ou au roulement de l'avion, ou à son décollage, etc., et transmettent leurs données suivant le protocole d'interrogation défini par les moyens électroniques 20.

Les données reçues par les moyens électroniques 20 sont traitées selon un algorithme prédéfini. Une horloge interne aux moyens électroniques peut par exemple comptabiliser le temps entre le décollage et l'atterrissage de l'avion.

Les données traitées, telles que le temps écoulé, sont ensuite délivrées par les moyens électroniques 20 et inscrites dans la mémoire 21.

Ces opérations d'inscription programmée par interrogation des organes de détection et d'émission de données sont liées à des paramètres relatifs au vitrage ou au produit intégrant le vitrage, elles se répètent tout au long de la vie du vitrage.

Bien entendu, durant la vie du vitrage, des informations qui sont générées par la volonté humaine peuvent être également inscrites dans la mémoire 21 via les moyens électroniques 20 aptes à gérer la réception de données d'autres systèmes d'émission que les organes 3. Un appareil de lecture/écriture 4 coopérera ainsi avec le dispositif électronique 2.

Toutes les informations stockées dans la mémoire 21 sont ensuite destinées à être lues grâce à l'appareil de lecture/écriture embarqué dans l'avion ou amené à proximité. Cet appareil est apte à retransmettre les informations lues au système central de base de données 5.

L'invention a été plus particulièrement décrite vis-à-vis d'une application dans l'aéronautique pour laquelle les informations changeantes correspondent notamment aux heures de vols. Néanmoins, l'invention s'applique à tout vitrage aéronautique dont certains paramètres d'utilisation du dispositif accueillant le vitrage ou d'utilisation du vitrage lui-même engendrent le déclenchement d'enregistrement programmé d'informations dans la mémoire du dispositif électronique du vitrage.

Le vitrage peut par exemple comprendre un élément électrique intégré dont il est utile de connaître les données ou états de fonctionnement, le fabricant ou le fournisseur désirant connaître l'état effectif d'utilisation in situ de l'élément intégré afin éventuellement pouvoir se protéger contre des recours injustifiés à la garantie.

L'élément intégré est tel qu'un moteur électrique qui entraîne une persienne ou un ventilateur.

Il peut également s'agir d'une soupape électriquement commutable d'égalisation de pression qui permet d'égaliser périodiquement la pression intérieure d'un vitrage isolant et la pression extérieure.

On connaît également des vitres isolantes dans lesquelles des cellules solaires sont intégrées.

Les données ou états de fonctionnement de l'élément intégré sont ainsi enregistrés de manière automatisée dans le dispositif électronique 2.

Ces données peuvent comprendre les durées de fonctionnement ou d'enclenchement (mémoire de durée de marche), les cycles de commutation (compteurs d'alternances de charge), les températures maximales et/ou la consommation maximale de courant et/ou la tension maximale appliquée (mémoire écrasable de valeurs maximales / détection des surcharges) et similaires. Si l'élément intégré comprend des cellules solaires photovoltaïques, on peut saisir et évaluer leur production de courant (tension maximale, capacité fournie, etc.). Au besoin, le courant produit peut par ailleurs être utilisé pour alimenter le dispositif électronique.

Les données peuvent donc ensuite être lues à distance. Selon la portée et l'orientation de l'appareil de lecture, la lecture peut même être réalisée à partir du sol. Là encore, on peut prévoir d'adresser chaque dispositif électronique et chaque vitrage de fenêtre par l'intermédiaire d'une caractéristique individuelle et de ne permettre la transmission et la lecture à distance des données de fonctionnement qu'en cas de réception d'un signal d'appel d'adresse appropriée.

On aura veillé par ailleurs à introduire dans la mémoire 21 du dispositif électronique des informations statiques telles que des données relatives au numéro de série ou au numéro de pièce ainsi que la date ou l'année de fabrication, de manière à permettre d'identifier l'élément intégré sur le vitrage lui-même et sur site.

## Revendications

1. Vitrage comportant au moins un dispositif électronique (2) qui comporte :
- au moins une mémoire électronique (21) dans laquelle sont enregistrées des informations pouvant être lues à distance au moyen d'un appareil de lecture adapté,
- des moyens électroniques de réception et de traitement de données (20) qui sont connectés à la mémoire (21) de manière à transmettre et inscrire des informations dans ladite mémoire, lesdites informations stockées dans la mémoire (21) étant liées à des paramètres qui évoluent au cours du temps et qui sont relatifs au vitrage et/ou à un élément électrique intégré au vitrage,
**caractérisé en ce qu'il** est destiné à être intégré dans un dispositif de locomotion de type aéronautique et comporte en outre un ou plusieurs organes de détection et d'émission de données (3), qui sont des capteurs choisis parmi : capteur de courant électrique, capteur de pression, capteur de température, capteur de vibrations, accéléromètre, inclinomètre, détecteur d'actionnement mécanique,
les informations étant transmises et inscrites dans la mémoire par les moyens électroniques en réponse à des signaux reçus de manière programmée, c'est-à-dire de manière automatique et sans intervention humaine, depuis le ou les organes de détection et d'émission de données (3).

2. Vitrage selon la revendication 1, **caractérisé en ce que** l'accès aux informations enregistrées dans la mémoire (21) est réservé à des utilisateurs autorisés.

3. Vitrage selon l'une quelconque des revendications précédentes, **caractérisé en ce que** le dispositif électronique (2) est agencé de manière à être protégé de l'environnement extérieur.

4. Vitrage selon l'une quelconque des revendications précédentes, **caractérisé en ce que** le dispositif électronique (2) est rendu solidaire de la périphérie du vitrage, directement sur le substrat du vitrage ou sur un élément rapporté du vitrage tel qu'un cadre périphérique, et de préférence à un endroit destiné à être caché par le châssis dans lequel sera logé le vitrage.

5. Vitrage selon l'une quelconque des revendications précédentes, **caractérisé en ce que** le dispositif électronique (2) est incorporé à l'intérieur du vitrage muni d'au moins deux feuilles de verre.

6. Vitrage selon l'une quelconque des revendications précédentes, **caractérisé en ce que** la mémoire (21) du dispositif électronique comprend des informations déjà stockées avant le fonctionnement dudit dispositif électronique en réponse aux signaux reçus de manière programmée, les informations étant notamment relatives aux caractéristiques d'identification, de configuration, de fabrication, et aux caractéristiques techniques du vitrage et/ou d'un élément électrique intégré au vitrage.

7. Vitrage selon l'une quelconque des revendications précédentes, **caractérisé en ce que** les informations enregistrées dans la mémoire (21) du dispositif électronique du vitrage sont destinées à être lues par un appareil de lecture/écriture (4) fonctionnant également en tant qu'appareil d'écriture d'informations dans la mémoire (21) en réponse à une volonté humaine.

8. Vitrage selon la revendication 7, **caractérisé en ce que** les moyens de communication entre le dispositif électronique (2) et l'appareil de lecture/écriture (4) sont du type liaison par radio-fréquences telles que par des systèmes d'identification par radio-fréquences (RFID), par la technologie Wi-Fi ou Bluetooth^{®}, ou du type liaison par signal optique tel que par infrarouge, par pistes de transmission capacitives ou inductives, ou tout simplement du type liaison par câble.

9. Vitrage selon la revendication 8, **caractérisé en ce que** les moyens de communication correspondent à des signaux radio-fréquences, le dispositif électronique (2) comprenant une antenne (22) d'identification par radio-fréquences associée aux moyens électroniques (3), l'antenne coopérant avec une autre antenne (40) du même type associée à l'appareil de lecture/écriture (4).

10. Vitrage selon l'une quelconque des revendications précédentes, **caractérisé en ce que** les moyens électroniques (2) comportent un système d'identification du dispositif électronique qui évite la collision avec d'autres informations non destinées audit dispositif.

11. Vitrage selon l'une quelconque des revendications précédentes, **caractérisé en ce qu'**il comporte un marquage de reconnaissance informant du type particulier de vitrage qu'il constitue.

12. Vitrage selon la revendication 1, **caractérisé en ce que** les informations enregistrées dans la mémoire électronique (21) contiennent les heures de vol d'un appareil aéronautique.

## Patentansprüche

1. Verglasung, umfassend mindestens eine elektronische Vorrichtung (2), die Folgendes umfasst:
- mindestens einen elektronischen Speicher (21), in dem Informationen gespeichert sind, die aus der Ferne mit Hilfe eines geeigneten Lesegeräts gelesen werden können,
- elektronische Mittel zum Empfang und zur Verarbeitung von Daten (20), die mit dem Speicher (21) verbunden sind, um Informationen in den Speicher zu übertragen und einzutragen, wobei die in dem Speicher gespeicherten Informationen (21) mit Parametern verknüpft sind, die sich im Laufe der Zeit ändern und die relativ zur Verglasung und/oder zu einem in die Verglasung integrierten elektrischen Element sind,
**dadurch gekennzeichnet, dass** sie dazu bestimmt ist, in ein Luftfahrzeug integriert zu werden und sie außerdem ein oder mehrere Datenerkennungs- und -übertragungselemente (3) umfasst, bei denen es sich um Sensoren handelt, die ausgewählt sind aus: Stromsensor, Drucksensor, Temperatursensor, Vibrationssensor, Beschleunigungsmesser, Neigungsmesser, Detektor der mechanischen Betätigung,
wobei die Informationen durch die elektronischen Mittel in den Speicher übertragen und eingetragen werden als Antwort auf Signale, die auf programmierte Weise, d. h. auf automatische Weise und ohne menschlichen Eingriff, von dem oder den Datenerkennungs- und -übertragungselementen (3) empfangen werden.

2. Verglasung nach Anspruch 1, **dadurch gekennzeichnet, dass** der Zugriff auf die Informationen, die in dem Speicher (21) gespeichert sind, autorisierten Benutzern vorbehalten ist.

3. Verglasung nach einem beliebigen der vorhergehenden Ansprüche, **dadurch gekennzeichnet, dass** die elektronische Vorrichtung (2) angeordnet ist, um vom äußeren Umfeld geschützt zu sein.

4. Verglasung nach einem beliebigen der vorhergehenden Ansprüche, **dadurch gekennzeichnet, dass** die elektronische Vorrichtung (2) mit dem Umfang der Verglasung fest verbunden ist, direkt auf dem Substrat der Verglasung oder auf einem auf die Verglasung aufgesetzten Element, wie z. B. einem Umfangsrahmen, und vorzugsweise an einer Stelle, die dazu bestimmt ist, um vom Rahmen, in dem die Verglasung untergebracht ist, verborgen zu sein.

5. Verglasung nach einem beliebigen der vorhergehenden Ansprüche, **dadurch gekennzeichnet, dass** die elektronische Vorrichtung (2) in das Innere der Verglasung, die mit mindestens zwei Glasscheiben ausgestattet ist, eingebaut ist.

6. Verglasung nach einem beliebigen der vorhergehenden Ansprüche, **dadurch gekennzeichnet, dass** der Speicher (21) der elektronischen Vorrichtung Informationen umfasst, die bereits vor dem Betrieb der elektronischen Vorrichtung als Antwort auf Signale gespeichert wurden, die auf programmierte Weise empfangen wurden, wobei die Informationen insbesondere relativ zu den Eigenschaften zur Identifizierung, Konfiguration, Herstellung und technischen Eigenschaften der Verglasung und/oder einem elektrischen Element, das in die Verglasung integriert ist, sind.

7. Verglasung nach einem beliebigen der vorhergehenden Ansprüche, **dadurch gekennzeichnet, dass** die Informationen, die im Speicher (21) der elektronischen Vorrichtung der Verglasung gespeichert sind, dazu bestimmt sind, um von einem Lese-/Schreibgerät (4) gelesen zu werden, das auch als Gerät zum Schreiben von Informationen in den Speicher (21) als Antwort auf eine menschliche Absicht funktioniert.

8. Verglasung nach Anspruch 7, **dadurch gekennzeichnet, dass** die Mittel zur Kommunikation zwischen der elektronischen Vorrichtung (2) und dem Lese-/Schreibgerät (4) Verbindungen durch Funkfrequenzen wie z. B. durch Systeme zur Identifizierung durch Funkfrequenzen (RFID), durch WLAN- oder Bluetooth®-Technologie oder Verbindungen durch optisches Signal wie z. B. durch Infrarot, durch kapazitive oder induktive Übertragungswege oder ganz einfach Verbindungen durch Kabel sind.

9. Verglasung nach Anspruch 8, **dadurch gekennzeichnet, dass** die Kommunikationsmittel Funkfrequenzsignalen entsprechen, wobei die elektronische Vorrichtung (2) eine Antenne (22) zur Identifizierung durch Funkfrequenzen, verbunden mit den elektronischen Mitteln (3), umfasst, wobei die Antenne mit einer weiteren Antenne (40) vom gleichen Typ zusammenwirkt, die mit dem Lese-/Schreibgerät (4) verbunden ist.

10. Verglasung nach einem beliebigen der vorhergehenden Ansprüche, **dadurch gekennzeichnet, dass** die elektronischen Mittel (2) ein System zur Identifizierung der elektronischen Vorrichtung umfassen, das die Kollision mit anderen Informationen, die nicht für die Vorrichtung bestimmt sind, vermeidet.

11. Verglasung nach einem beliebigen der vorhergehenden Ansprüche, **dadurch gekennzeichnet, dass** sie eine Markierung zur Erkennung umfasst, die über den besonderen Typ der Verglasung, den sie darstellt, informiert.

12. Verglasung nach Anspruch 1, **dadurch gekennzeichnet, dass** die Informationen, die im Speicher (21) der elektronischen Vorrichtung der Verglasung gespeichert sind, die Flugstunden eines Luftfahrtgeräts enthalten.

## Claims

1. A window panel including at least one electronic device (2) which comprises:
- at least one electronic memory (21) in which is entered information that can be read remotely using an appropriate reading apparatus,
- electronic means of receiving and processing data (20) that are connected to the memory (21) in such a way as to transmit and enter information to and in said memory, said information stored in the memory (21) being linked to parameters that evolve over time and that relate to the window panel and/or to an electrical element incorporated in the window panel,
- **characterized in that** it is intended to be incorporated in a locomotive device of aeronautical type and further comprises one or more units for detecting and sending data (3), which are sensors chosen among : electrical current sensors, pressure sensors, temperature sensors, vibration sensors, accelerometers, inclinometers, mechanical actuation detectors,
the information being transmitted and entered in the memory by the electronic means in response to signals received in a programmed way, i.e. in an automated way without human intervention, from the one or more units for detecting and sending data (3).

2. The window panel as claimed in claim 1, **characterized in that** access to the information stored in the memory (21) is reserved for authorized users.

3. The window panel as claimed in any one of the preceding claims, **characterized in that** the electronic device (2) is protected from the external environment.

4. The window panel as claimed in any one of the preceding claims, **characterized in that** the electronic device (2) is joined to the periphery of the window panel, directly on the substrate of the window panel or on an element added to the window panel such as a peripheral frame, and preferably in a position intended to be concealed by the framework in which the window panel will be housed.

5. The window panel as claimed in any one of the preceding claims, **characterized in that** the electronic device (2) is incorporated inside the window panel provided with at least two sheets of glass.

6. The window panel as claimed in any one of the preceding claims, **characterized in that** the memory (21) of the electronic device comprises information already stored before the operation of said electronic device in response to the signals received in a programmed way, the information being in particular related to the identification, configuration and production characteristics and to the technical characteristics of the window panel and/or of an electrical element incorporated in the window panel.

7. The window panel as claimed in any one of the preceding claims, **characterized in that** the information stored in the memory (21) of the electronic device of the window panel is intended to be read by a reading/writing apparatus (4) also operating as an apparatus for writing information into the memory (21) in response to a human choice.

8. The window panel as claimed in claim 10, **characterized in that** the means of communication between the electronic device (2) and the reading/writing apparatus (4) are of the radiofrequency link type, such as radiofrequency identification systems (RFID), Wi-Fi or Bluetooth® technology, or of the type using a link by optical signal such as by infrared, by capacitive or inductive transmission tracks, or quite simply of the cable link type.

9. The window panel as claimed in claim 11, **characterized in that** the communication means correspond to radiofrequency signals, the electronic device (2) including an antenna (22) for identification by radiofrequencies associated with the electronic means (3), the antenna cooperating with another antenna (40) of the same type associated with the reading/writing apparatus (4).

10. The window panel as claimed in any one of the preceding claims, **characterized in that** the electronic means (2) include a system of identifying the electronic device that avoids collision with other information not intended for said device.

11. The window panel as claimed in any one of the preceding claims, **characterized in that** it includes a recognition marking providing information on the particular type of window panel that it constitutes.

12. The window panel as claimed in claim 1, **characterized in that** the electronic memory (21) is intended to store the flying hours of an aeronautical device.
